# EUROPEAN PATENT SPECIFICATION

(11) **EP 2 383 523 B1**
(45) Date of publication and mention of the grant of the patent: **11.07.2012**
(21) Application number: 10305468.0
(22) Date of filing: 30.04.2010
(51) Int. Cl.: F24D 3/08, F24D 17/00, F24D 11/00, F24D 12/02

(54) **Heating plant for the production of domestic hot water**
Heizungsanlage zur Warmwasserproduktion in einem Haushalt
Installation de chauffage pour la production d'eau chaude domestique

(43) Date of publication of application: 02.11.2011
(73) Proprietor: Alfa Laval Corporate AB, 221 00 Lund (SE); Alfa Laval Hes, 69210 Lentilly (FR)
(72) Inventor: Perrin, Matthieu, 69008 Lyon (FR)
(74) Representative: Palix, Stéphane

(56) References cited:
- EP-A1- 0 006 211
- EP-A1- 0 675 326
- WO-A1-2010/032236
- DE-U1- 9 403 331
- DE-U1- 29 512 132
- DE-U1- 29 512 133
- US-A- 4 191 172

## Description

### TECHNICAL FIELD

The invention relates to the field of communal heating plants for the production of domestic hot water for a building, a block, or a plurality of housing units in proximity to one another.

The invention is more specifically aimed at heating plants that use a plurality of heat energy production sources. Indeed, this type of plant may comprise a main source and a secondary source for the production of heat energy. The main source may in particular be an independent boiler or a connection to a centralized heating network intended to supply a plurality of plants. It also comprises a secondary heat energy production source which is to advantage a source that uses a renewable energy such as solar energy or ground heat in the case of a heat pump.

### PRIOR ART

Generally speaking, heating plants are known in which the main and secondary heat energy production sources are arranged in series on a secondary circuit in which flows a fluid constituted by the domestic hot water for heating, see e.g. EP 0 675 326 A1.

In this case, the domestic hot water moves therefore constantly in two successive heat exchangers and draws its heat energy constantly from both heat energy production sources.

However, when the secondary heat energy production source uses solar energy, the fluid supplying energy to the domestic hot water flowing in the heat exchanger may be brought to a very high temperature, in particular above 100°C. This high temperature of the fluid then causes fouling inside the exchanger by depositing scale on the outer surface of the walls defining the superheated fluid circuit. As a result, the energy efficiency of the exchanger may decrease rapidly making it necessary to replace or clean this element on a regular basis.

The aim of the invention is thus to make it possible, on the one hand, to simplify existing heating plants by reducing the number of heat exchangers they comprise, and on the other hand, to guarantee greater efficiency and longer durability of the elements it comprises while using, as a priority, renewable energies such as solar energy in particular.

A further objective is to make it possible to use the renewable energy of the secondary source to transmit to the main source a fluid at a temperature equal to that of the fluid output from the main source. In this way, it is possible not to use energy from the main source or even to sell energy back when the main source is a connection to a centralized heating network.

### DISCLOSURE OF THE INVENTION

The invention therefore relates to a heating plant for the production of domestic hot water, this plant comprising a first heat exchanger connected to two fluid circuits and wherein a first fluid of a primary circuit transmits heat energy to a second fluid of a secondary circuit constituted by the domestic hot water.

According to the invention, this plant is characterized in that the primary circuit comprises:
- a main heat energy production source and a secondary heat energy production source, the main and secondary sources being arranged hydraulically in series, the secondary source being arranged upstream of the main source;
- a secondary source by-pass pipe arranged hydraulically in parallel relative to the secondary source;
- a three-port valve capable of selectively orientating the first fluid into the secondary source or into the by-pass pipe;
and in that the heating plant comprises a control unit for controlling the three-port valve.

In other words, the main and secondary heat energy production sources make it possible to heat a first fluid of the primary circuit and a three-port valve allows the secondary heat energy production source to be short-circuited when it is exhausted or not transmitting heat to the first fluid. As a result, the three-port valve may be a "distribution" valve when it is arranged hydraulically upstream of the secondary source and the by-pass pipe. The three-port valve may also be a "mixing" valve when it is arranged downstream of the secondary source and the by-pass pipe.

Furthermore, when the secondary heat energy production source uses a renewable energy source, such as solar energy, ground heat in the case of a heat pump or condensate energy recovery, it stores, inside a tank, a fluid whereof the temperature decreases as it allows the first fluid of the primary circuit to heat up. Once the temperature of the fluid in the tank has reached a minimum threshold temperature, the control unit then controls the three-port valve so as to direct the first fluid inside a by-pass pipe. From that moment on, the secondary heat energy production source no longer exchanges heat with the first fluid flowing in the first exchanger. In this case, the temperature of the fluid inside the storage tank is able to rise gradually until it reaches a higher threshold value above which the control unit controls the three-port valve so as to direct the first fluid of the primary circuit inside the secondary heat energy production source.

Moreover, a plurality of heat energy production sources may be used in conjunction and arranged in parallel so as to heat up the fluid in the tank. Indeed, provision is made in particular to use both the solar energy and a heat pump in conjunction to heat up the fluid flowing in the tank.

According to a first embodiment, the three-port valve is able to direct the first fluid towards the secondary heat energy production source when the temperature of the first fluid, at an upstream junction between the by-pass pipe and the secondary source, is below the temperature of the first fluid inside a closed storage tank of the secondary heat energy production source.

In this case, the fluid flowing inside the storage tank is the same fluid as that enabling the temperature of the domestic hot water to be raised in the first heat exchanger and corresponds to the first fluid of the primary circuit. Furthermore, a closed storage tank has an architecture devoid of openings allowing the atmospheric pressure to exert a vertical thrust on the fluid. A closed storage tank of this kind generally has a lower orifice situated in proximity to the lower end of the tank, an intermediate orifice for introducing the heated fluid and an upper orifice for drawing the fluid inside the storage tank.

To advantage, the secondary heat energy production source may comprise a second heat exchanger connected to two fluid circuits and in which a third fluid of a third system transmits heat energy to the first fluid.

Put another way, the secondary heat energy production source makes it possible not to use the first fluid of the primary circuit in additional heating components, such as solar panels or heat pumps. As a result, the third fluid flowing in these additional components transmits its heat energy to the first fluid inside the second heat exchanger.

According to a second embodiment, the secondary heat energy production source may comprise a third heat exchanger connected to two fluid circuits and in which the first fluid of the primary circuit harnesses heat energy from a fourth fluid of a fourth circuit.

In this way, the secondary heat energy production source does not use the first fluid directly. A third heat exchanger in fact allows a fourth fluid to be used to transmit its heat energy to the first fluid of the primary circuit.

In practice, the three-port valve may direct the first fluid towards the secondary heat energy production source when the temperature of the first fluid, at the upstream junction between the by-pass pipe and the secondary source, is below the temperature of the fourth fluid inside an open storage tank of the secondary heat energy production source.

In other words, the control unit can be used to control the three-port valve so as to use the secondary heat energy production source when the temperature of the first fluid, at the upstream junction between the by-pass pipe and the secondary source, is below the temperature of the fourth fluid inside an open storage tank. A storage tank of this kind therefore has an *"open"* architecture, in other words it does not have a tank draw-off orifice situated at the upper end of the tank. A storage tank of this kind is particularly advantageous so as not to generate a significant closed volume, and as a result not being able to be filled with other elements. Indeed, an open storage tank allows for example a plurality of tanks to be inserted one inside the other thereby generating a minimum space requirement, which is particularly advantageous for storing tanks of this kind or transporting them.

Furthermore, the secondary heat energy production source may comprise a second heat exchanger connected to two fluid circuits, and in which a third fluid of a third circuit transmits heat energy to the fourth fluid.

In this case, the secondary heat energy production source comprises within it two fluids each able to afford specific features. Generally speaking, the third fluid is able, when it is used with a heating device such as a solar panel, to come in the form of glycol water so as to offer effective resistance against frost in particular. The fourth fluid and the first fluid may for their part be water with no additives since these fluids are not necessarily exposed to frost.

According to one particular embodiment, the storage tank and the second heat exchanger may be arranged hydraulically in parallel.

Indeed, the lower end of the tank may be connected with the inlet of the second heat exchanger. Furthermore, an intermediate orifice of the storage tank is connected with the outlet of the second heat exchanger. An upper orifice can be used to draw the fluid inside the storage tank.

To advantage, the primary circuit may be connected to a building heating network, the outlet of the network being connected upstream of the three-port valve and downstream of the first heat exchanger, the network inlet being connected upstream of the first heat exchanger and downstream of the main heat energy production source.

Put another way, a plant of this kind may use both the heat generated by a building heating network and the heat generated by at least one of the two heat energy production sources at periods with a substantial heat requirement. Said periods are generally morning, lunchtime and evening and correspond to the times at which the users of a building get washed or wash the dishes.

Furthermore, at periods when the heating of domestic hot water is not required, it is also conceivable for the secondary heat energy production source to be used in order to transmit to the building heating network a first fluid at a predetermined temperature which may in particular be 95°C which corresponds to the temperature of the first fluid at the heating network outlet. In this way, it is possible to use the secondary source to sell back energy to a heating network.

In practice, the plant may comprise a plurality of first individual heat exchangers each arranged respectively in an individual housing unit.

In this way, the domestic hot water makes a closed circuit solely inside each individual housing unit and does not flow throughout lengthy pipework to a centralized heat exchanger arranged in the main and secondary heat energy production sources of the plant.

Furthermore, with a plant of this kind it is also possible to heat an individual heating circuit specific to each housing unit. With this type of plant therefore, each housing unit then comprises two heat exchangers, one exchanger to heat the domestic hot water and one exchanger for heating the housing unit. These two exchangers are mounted in parallel on the primary circuit of the plant.

### BRIEF DESCRIPTION OF THE FIGURES

The method for implementing the invention and the advantages arising, will become clearer from the description of the following embodiment, given for information purposes but non-restrictively, supported by the figures wherein:
- figures 1 to 6 show the different operational stages of heat regulation using a plant in accordance with the invention;
- figures 7 to 11 show for their part different alternatives of a plant in accordance with the invention.

### DETAILED DESCRIPTION OF THE INVENTION

As already mentioned, the invention relates to a heating plant for the production of domestic hot water.

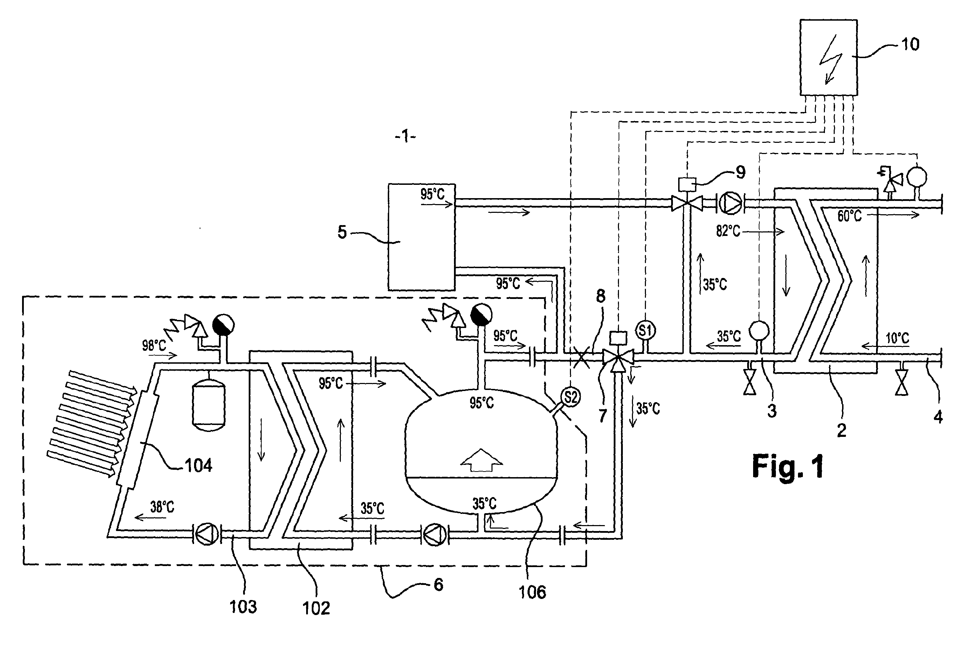

As shown in figure 1, the heating plant **1** can be used to heat the domestic hot water present in a secondary circuit **4**. This heating occurs by means of a heat exchanger **2** in which a primary circuit **3** of a first fluid transmits its heat to the domestic hot water.

Said plant 1 comprises two heat energy production sources. A main source **5** may in particular be constituted by a boiler, but also by a connection to a centralized network heating the first fluid. Said network may thus be connected to a plurality of housing units or buildings, such as high-rise buildings used for residential purposes or for any other activity such as hospitals, canteens or offices.

This plant **1** also comprises a secondary heat energy production source **6**. Said secondary source may, as shown, use solar energy from panels positioned on the roof of the building fitted with this plant. Said secondary source **6** may also be a heat pump and as a result use the heat supplied by the ground situated underneath the building fitted with a plant of this kind.

This plant also comprises a three-port valve **7** arranged upstream of the secondary source **6** and downstream of the heat exchanger **2**. Moreover, a by-pass pipe **8** is used to connect the three-port valve **7** hydraulically with the main source **5** and is therefore arranged in parallel relative to the secondary heat energy production source **6**. In this case the three-port valve **7** is therefore a distribution valve but provision is also made for using a mixing valve positioned at a downstream junction between the secondary source **6** and the by-pass pipe **8**.

As shown, the secondary heat energy production source **6** comprises a second heat exchanger **102** in which the first fluid of the primary circuit **3** harnesses the heat of a third fluid flowing inside a third circuit **103**. As shown, this third circuit **103** comprises a solar panel **104** in which the third fluid harnesses the solar energy, thereby generating an increase in its temperature.

Furthermore, the secondary heat energy production source **6** comprises a closed storage tank **106**, thereby constituting an energy reserve for the first fluid flowing in the primary circuit **3**. Moreover, a thermostat **S2** is arranged in proximity to the upper end of the storage tank **106** for setting the temperature **T2** of the first fluid at this level of the storage tank **106**.

Moreover, a thermostat **S1** arranged in the three-port valve **7** allows the temperature **T1** of the first fluid to be set at this level. So, when the temperature **T2** of the first fluid is higher than the temperature **T1** of the first fluid, a control unit **10** can be used to control the three-port valve **7** so that the flow of the first fluid is directed inside the secondary heat energy production source **6**.

Figure 1 shows the plant at the start of a domestic hot water consumption peak. Indeed, in this case, the domestic hot water of the secondary circuit **4** returns inside the heat exchanger **2** at a cold temperature. As a result, the temperature of the first fluid decreases inside the heat exchanger **2**, for example from 82°C to a value of 35°C. The first fluid then penetrates at a temperature of 35°C inside the storage tank **106** via another orifice situated at a lower end. In this way, the first fluid present inside the storage tank **106** may be at about 35°C at the bottom of the tank **106** and 95°C at the top of the tank. This temperature of 95°C is obtained by heating up the first fluid inside the second heat exchanger **102** by means of the third fluid flowing in the third circuit **103**. As a result, the water drawn from the storage tank **106** and which has its temperature measured by the thermostat **S2** remains at 95°C. This first fluid at 95°C then supplies the main heat energy production source **5** which then has no need to heat up this first fluid and also supplies at output a first fluid at 95°C.

Furthermore, a second three-port valve **9** can be used to mix the first fluid at 95°C with a portion of the first fluid at 35°C coming from the outlet of the first exchanger **2**.

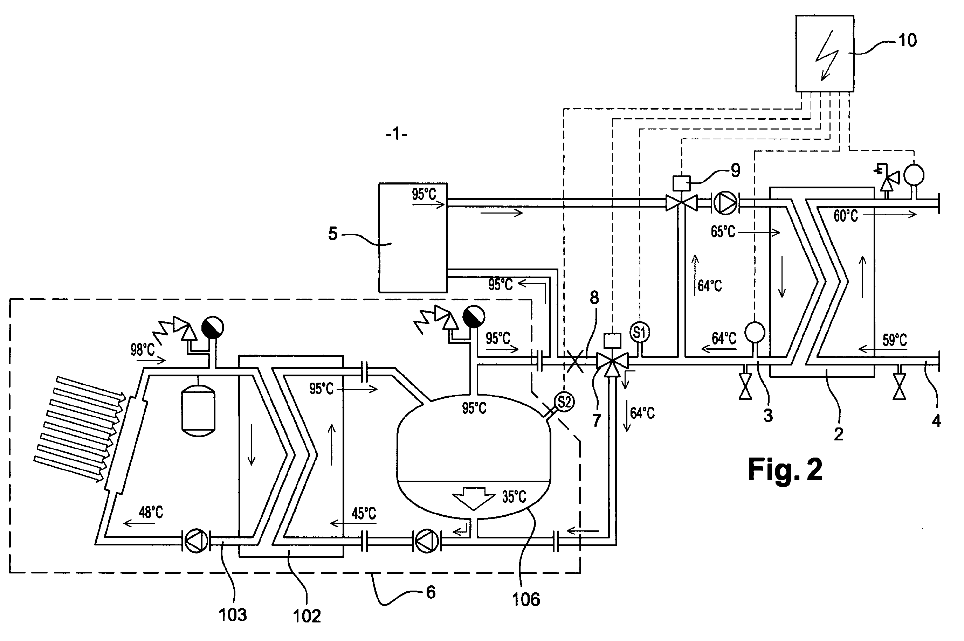

As shown in figure 2, when the domestic hot water consumption peak is over, the first fluid loses no heat energy inside the first heat exchanger **2**. As a result, the first fluid may be directed towards the secondary heat energy production source **6** with a temperature higher than the first fluid contained in the bottom of the tank **106**. Said temperature may in particular be about 60°C thereby allowing a portion of the first lower temperature fluid contained in the bottom part of the storage tank **106** to be heated up. During these periods of so-called "low consumption" of domestic hot water, the storage tank **106** is then loaded with the first fluid at a high temperature which may in particular be 95°C.

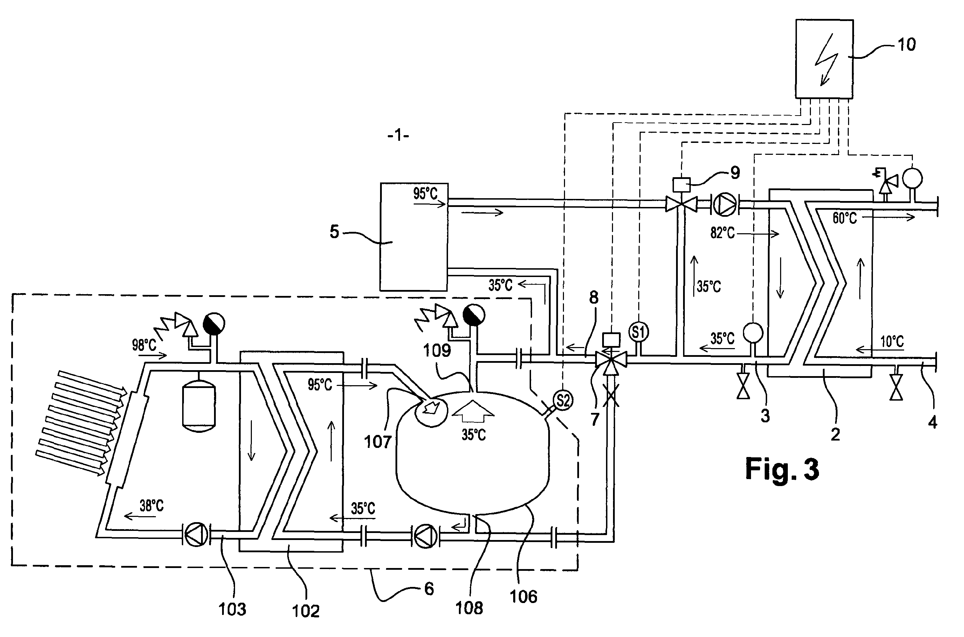

As shown in figure 3, when the temperature **T2** of the first fluid inside the tank **106** is below the temperature **T1** of the first fluid in the three-port valve **7**, the control unit **10** then controls the three-port valve **7** so as to direct the first fluid inside a by-pass pipe **8**. In this case, the first fluid allowing its heat to be exchanged with the domestic hot water in the first exchanger **2**, is no longer directed towards the secondary heat energy production source **6**. Such a step may in particular be obtained at the end of the domestic hot water consumption peak. Furthermore, if the renewable energy is still available, the third circuit **103** can be used, inside the second exchanger **102**, to raise the temperature of the first fluid contained inside the storage tank **106**. This first fluid portion flows in a closed circuit between an intermediate orifice **107** and a lower orifice **108** of the storage tank **106**. The fluid then no longer escapes from the upper orifice **109** of the storage tank **106**.

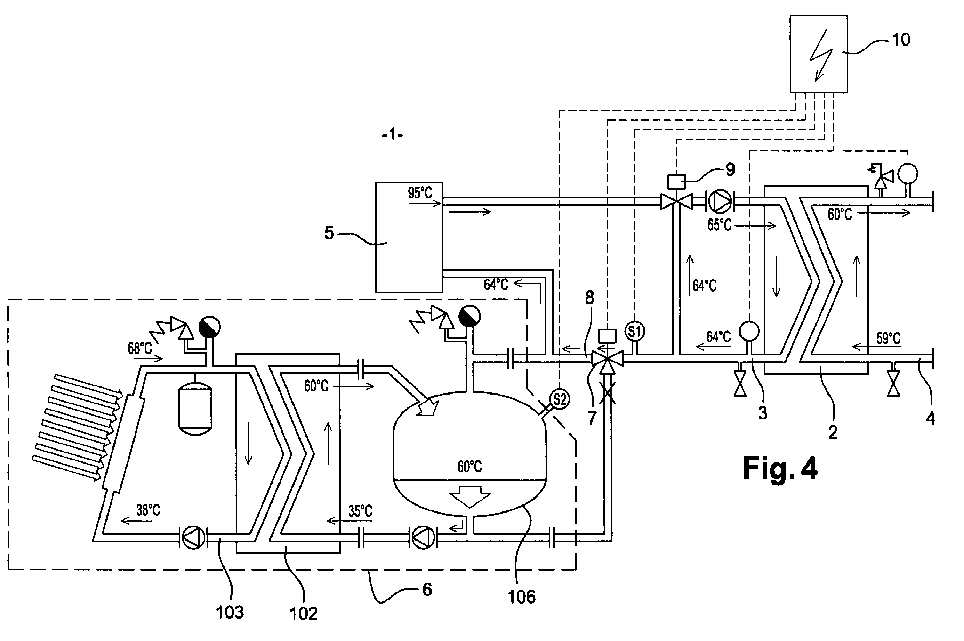

As shown in figure 4, so long as the temperature **T2** inside the storage tank **106** is below the temperature **T1** of the first fluid in the three-port valve **7**, the control unit **10** prevents the first fluid of the primary circuit **3** from returning inside the secondary heat energy production source **6**. However, with solar energy, the first fluid portion contained inside the secondary heat energy production source **6** may be heated inside the second heat exchanger **102**. In this way, even when there is no significant need for domestic hot water consumption, the main heat energy production source **5** is not used so as to heat the first fluid contained inside the storage tank **106** of the secondary source **6**.

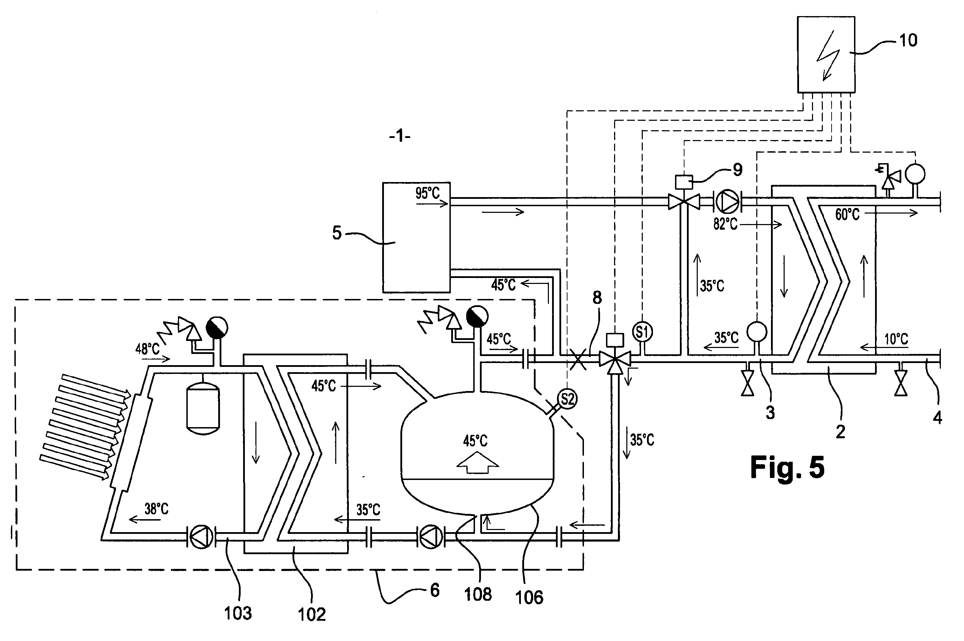

As shown in figure 5, if domestic hot water consumption increases, it causes a drop in the temperature of the first fluid flowing inside the first heat exchanger **2**, and as a result, the temperature of the first fluid **T1** may then drop below the temperature **T2** of the first fluid contained in the storage tank **106**. In this case, the control unit **10** then controls the three-port valve **7** in such a way as to direct the first fluid at the temperature **T1** towards the secondary heat energy production source **6**. The heating plant then uses the first fluid contained in the storage tank **106** at a temperature **T2** above the temperature **T1** at the outlet of the first heat exchanger **2**. As shown, the first fluid then penetrates into the lower orifice **108** of the storage tank **106** and causes the first fluid contained in the storage tank **106** to cool.

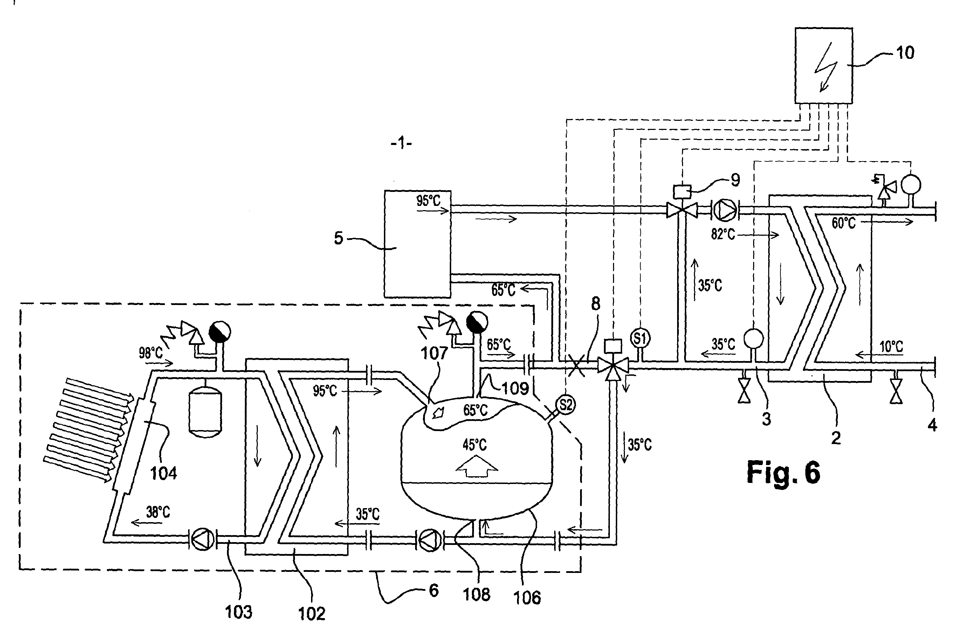

Furthermore, and as shown in figure 6, if the sunshine allows, the solar panel **104** is able to increase the temperature of the third fluid contained in the third circuit **103**, thereby increasing the temperature of the first fluid flowing inside the second exchanger **102**. As a result, the first fluid is able to penetrate both at the lower orifice **108** and the intermediate orifice **107** and allow the temperature **T2** to remain above the temperature **T1** even during periods of peak consumption of domestic hot water.

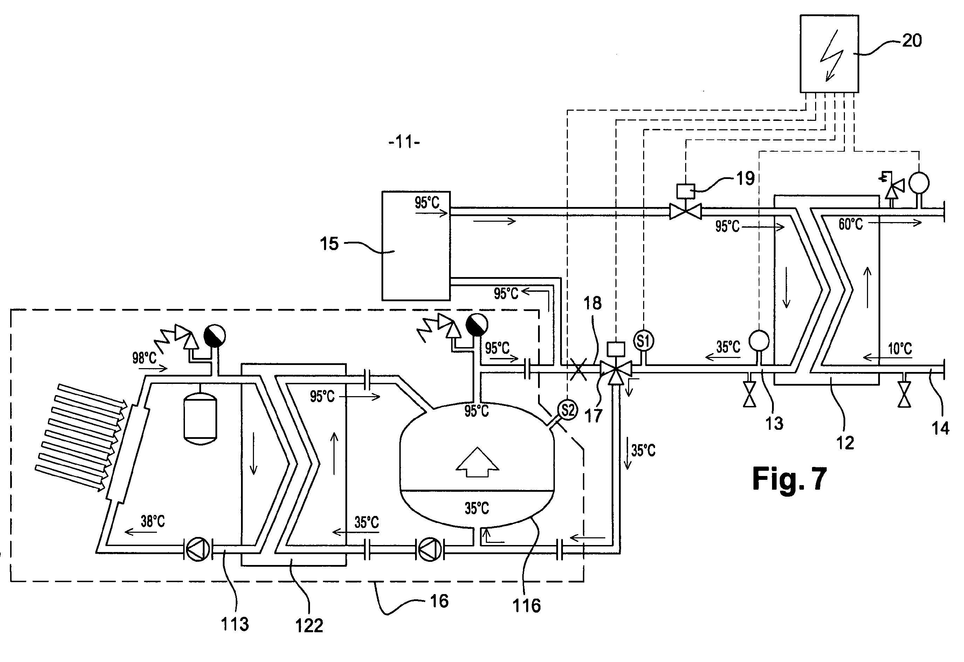

As shown in figure **7**, the heating plant **11** may comprise a two-port valve **19** instead of the three-port valve previously used in figures 1 to 6. In this case, the first fluid at the outlet of the main heat energy production source **5**, is directly introduced inside the first exchanger **12** without being mixed with a first fluid portion emerging from the first heat exchanger **12**.

In the same way as previously, the three-port valve **17** directs the first fluid inside the secondary heat energy production source **16** when the temperature **T2** of the first fluid contained inside the storage tank **116** is above the temperature **T1** of the fluid in the three-port valve **17**. The first fluid does not therefore flow in this case inside the by-pass pipe **18**.

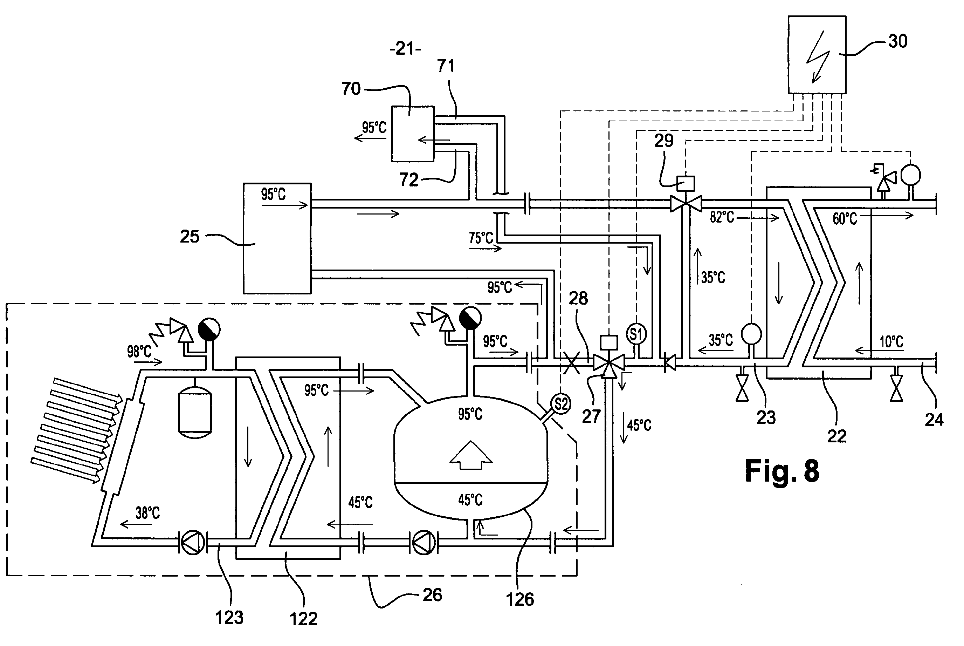

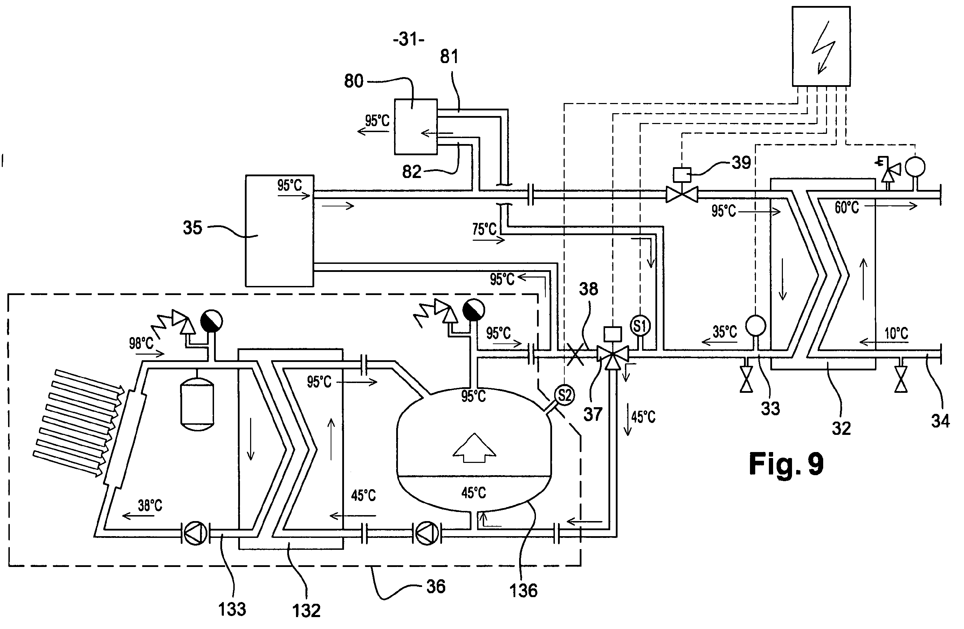

As shown in figures 8 and 9, a heating plant may also be coupled with the heating network for heating the walls, floors or air in a building.

Thus, as shown in figure 8, the heating network **70** comprises an outlet **71** connected to the primary circuit **23** upstream of the three-port valve **27** and downstream of the first heat exchanger **22**.

The heating network inlet **72** is, for its part, connected to the primary circuit **23** upstream of the first heat exchanger **22** and downstream of the main heat energy production source **25**. An arrangement of this kind thereby makes it possible to use the building's heating fluid which is in this case also the first fluid of the domestic hot water heating plant, and makes it possible to use the secondary heat energy production source **26** to heat up the first fluid which will then be transmitted in the inlet **72** of the heating network **70**. As a result, the heating network **70** may possibly not consume energy in such a way as to heat up the first fluid flowing in its pipes.

As shown in this alternative, the plant **21** comprises a three-port valve **29** for mixing the first fluid between the outlet of the main heat energy production source **25** and the first fluid emerging from the first heat exchanger **22**. Said three-port valve **29** then allows the temperature of the first fluid at the inlet of the first heat exchanger **22** to be lowered, thereby reducing the fouling thereof, by means of the lowest possible fluid temperature on the primary side of the exchanger.

Furthermore, and as shown in figure 9, the heating plant **31** may also be connected to a heating network **80** and in this case, use a two-port valve **39** allowing the first fluid to flow inside the heat exchanger **32** without being mixed with a portion of the first fluid emerging from this exchanger.

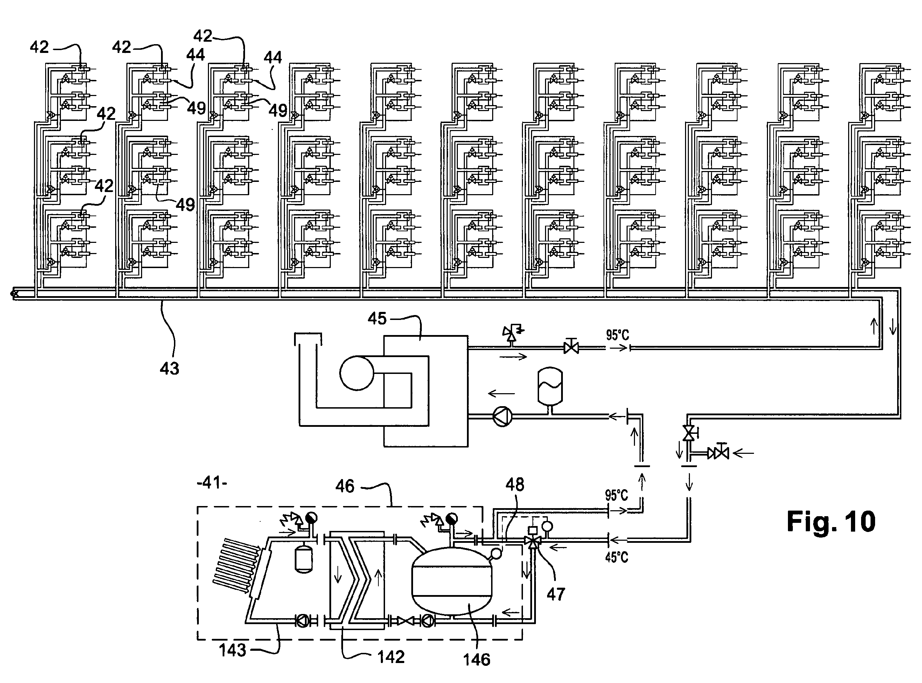

As shown in figure 10, a plant **41** may also comprise a plurality of first individual heat exchangers **42** to allow the domestic hot water to be heated. The plant may also comprise a plurality of heat exchangers **49** mounted in parallel relative to the first heat exchangers **42** and allowing the housing units to be heated. The different heat exchangers **42**, **49** are thus each arranged in an individual housing unit. In this case, the first fluid flowing in the primary circuit **43** penetrates inside a plurality of first exchangers **42** in order to transmit its heat energy to a plurality of secondary circuits **44**. Said heating plant **41** further always comprises a main heat energy production source **45** arranged hydraulically in series with a secondary heat energy production source **46**. The secondary source **46** is arranged upstream of the main source **45**.

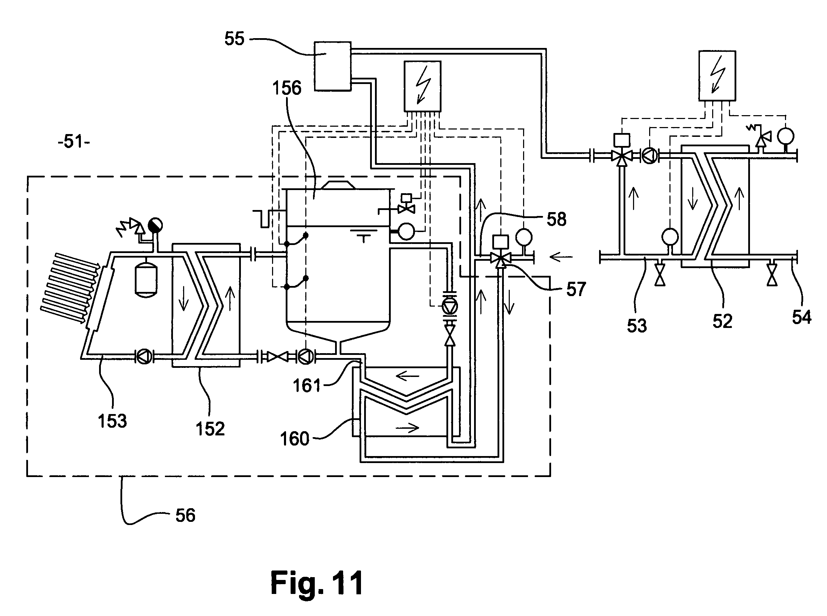

As shown in figure 11, a heating plant **51** may also comprise an open storage tank **156**. In this case, the fluid flowing inside the tank **156** is different from the first fluid. It is a fourth fluid that flows in a fourth circuit **161** and transmits its heat energy to the first fluid inside a third heat exchanger **160**.

Said type of storage tank **156** is particularly advantageous for ease of storage and transportation.

It is clear from what has been said above that a plant in accordance with the invention affords many advantages, and in particular:
- it allows the secondary heat energy production source to be used as a priority;
- it guarantees an optimum heat exchange with the domestic hot water;
- it requires no or few maintenance operations;
- it allows energy to be supplied to a centralized heating network
- it allows a single heat exchanger to be used to transmit the heat energy from the two heat energy production sources to the domestic hot water.

## Claims

1. Heating plant (1, 11, 21, 31, 41, 51) for the production of domestic hot water, said plant comprising a first heat exchanger (2, 12, 22, 32, 42, 52) connected to two fluid circuits and in which a first fluid of a primary circuit (3, 13, 23, 33, 43, 53) transmits heat energy to a second fluid of a secondary circuit (4, 14, 24, 34, 44, 54) constituted by the domestic hot water **characterized in that** said primary circuit (3, 13, 23, 33, 43, 53) comprises:
• a main heat energy production source (5, 15, 25, 35, 45, 55) and a secondary heat energy production source (6, 16, 26, 36, 46, 56), said main and secondary sources being arranged hydraulically in series, the secondary source (6, 16, 26, 36, 46, 56) being arranged upstream of the main source (5, 15, 25, 35, 45, 55);
• a by-pass pipe (8, 18, 28, 38, 48, 58) of the secondary source arranged hydraulically in parallel relative to the secondary source (6, 16, 26, 36, 46, 56);
• a three-port valve (7, 17, 27, 37, 47, 57) capable of selectively directing the first fluid into the secondary source (6, 16, 26, 36, 46, 56) or into the by-pass pipe (8, 18, 28, 38, 48, 58);
and **in that** the heating plant (1, 11, 21, 31, 41, 51) comprises a control unit (10, 20, 30) for controlling the three-port valve (7, 17, 27, 37, 47, 57).

2. Plant as claimed in claim 1, **characterized in that** the three-port valve (7, 17, 27, 37, 47) directs the first fluid towards the secondary heat energy production source (6, 16, 26, 36, 46) when the temperature T1 of the first fluid, at an upstream junction between the by-pass pipe (8, 18, 28, 38, 48) and the secondary source (6, 16, 26, 36, 46), is below the temperature T2 of the first fluid inside a closed storage tank (106, 116, 126, 136, 146) of said secondary source (6, 16, 26, 36, 46).

3. Plant as claimed in claim 2, **characterized in that** the secondary heat energy production source (6, 16, 26, 36, 46) comprises a second heat exchanger (102, 112, 122, 132, 142) connected to two fluid circuits and in which a third fluid of a third circuit (103, 113, 123, 133, 143) transmits heat energy to the first fluid.

4. Plant as claimed in claim 1, **characterized in that** the secondary heat energy production source (56) comprises a third heat exchanger (160) connected to two fluid circuits and in which the first fluid of the primary circuit (53) harnesses heat energy from a fourth fluid flowing in a fourth circuit (161).

5. Plant as claimed in claim 4, **characterized in that** the three-port valve (57) directs the first fluid towards the secondary heat energy production source (56) when the temperature T1 of the first fluid, at an upstream junction between the by-pass pipe (58) and the secondary source (56), is below the temperature T2 of the fourth fluid inside an open storage tank (156) of said secondary source (56).

6. Plant as claimed in claim 4, **characterized in that** the secondary heat energy production source (56) comprises a second heat exchanger (152) connected to two fluid circuits and in which a third fluid of a third circuit (153) transmits heat energy to the fourth fluid.

7. Plant as claimed in one of claims 3 or 6, **characterized in that** the storage tank (106, 116, 126, 136, 146, 156) and the second heat exchanger (102, 112, 122, 132, 142, 152) are arranged hydraulically in parallel.

8. Plant as claimed in claim 1, **characterized in that** the primary circuit (23, 33) is connected to a building heating network (70, 80), the outlet (71, 81) of the network (70, 80) being connected upstream of the three-port valve (27, 37) and downstream of the first heat exchanger (22, 32), the inlet (72, 82) of the network (70, 80) being connected upstream of the first heat exchanger (22, 32) and downstream of the main heat energy production source (25, 35).

9. Plant as claimed in claim 1, **characterized in that** it comprises a plurality of first individual heat exchangers (42) each arranged respectively in an individual housing unit.

## Patentansprüche

1. Heizungsanlage (1, 11, 21, 31, 41, 51) zur Warmwassererzeugung in einem Haushalt, wobei die Anlage einen ersten Wärmetauscher (2, 12, 22, 32, 42, 52) umfasst, der an zwei Flüssigkeitskreisläufe angeschlossen ist, und in dem eine erste Flüssigkeit eines Primärkreislaufs (3, 13, 23, 33, 43, 53) Wärmeenergie an eine zweite Flüssigkeit eines Sekundärkreislaufs (4, 14, 24, 34, 44, 54) überträgt, der durch das Haushaltwarmwasser gebildet ist, **dadurch gekennzeichnet, dass** der Primärkreislauf (3, 13, 23, 33, 43, 53) umfasst:
• eine Hauptwärmeenergieerzeugungsquelle (5, 15, 25, 35, 45, 55) und eine sekundäre Wärmeenergieerzeugungsquelle (6, 16, 26, 36, 46, 56), wobei die Hauptquelle und die sekundäre Quelle hydraulisch in Reihe geschaltet sind, wobei die sekundäre Quelle (6, 16, 26, 36, 46, 56) stromauf der Hauptquelle (5, 15, 25, 35, 45, 55) angeordnet ist;
• ein Umgehungsrohr (8, 18, 28, 38, 48, 58) der sekundären Quelle, das in Bezug auf die sekundäre Quelle (6, 16, 26, 36, 46, 56) hydraulisch parallel angeordnet ist;
• ein Dreiwegeventil (7, 17, 27, 37, 47, 57), das selektiv die erste Flüssigkeit in die sekundäre Quelle (6, 16, 26, 36, 46, 56) oder in das Umgehungsrohr (8, 18, 28, 38, 48, 58) leiten kann;
und dass die Heizungsanlage (1, 11, 21, 31, 41, 51) eine Steuereinheit (10, 20, 30) zum Steuern des Dreiwegeventils (7, 17, 27, 37, 47, 57) umfasst.

2. Anlage nach Anspruch 1, **dadurch gekennzeichnet, dass** das Dreiwegeventil (7, 17, 27, 37, 47, 57) die erste Flüssigkeit zur sekundären Wärmeenergieerzeugungsquelle (6, 16, 26, 36, 46) leitet, wenn die Temperatur T1 der ersten Flüssigkeit an einem vorgelagerten Übergang zwischen dem Umgehungsrohr (8, 18, 28, 38, 48, 58) und der sekundären Quelle (6, 16, 26, 36, 46) unter der Temperatur T2 der ersten Flüssigkeit im Inneren eines geschlossenen Speicherbehälters (106, 116, 126, 136, 146) der sekundären Quelle (6, 16, 26, 36, 46) liegt.

3. Anlage nach Anspruch 2, **dadurch gekennzeichnet, dass** die sekundäre Wärmeenergieerzeugungsquelle (6, 16, 26, 36, 46) einen zweiten Wärmetauscher (102, 112, 122, 132, 142) umfasst, der an zwei Flüssigkeitskreisläufe angeschlossen ist, und in dem eine dritte Flüssigkeit eines dritten Kreislaufs (103, 113, 123, 133, 143) Wärmeenergie an die erste Flüssigkeit überträgt.

4. Anlage nach Anspruch 1, **dadurch gekennzeichnet, dass** die sekundäre Wärmeenergieerzeugungsquelle (56) einen dritten Wärmetauscher (160) umfasst, der an die zwei Flüssigkeitskreisläufe angeschlossen ist, und in dem die erste Flüssigkeit des Primärkreislaufs (53) Wärmeenergie aus einer in einem vierten Kreislauf (161) fließenden vierten Flüssigkeit nutzt.

5. Anlage nach Anspruch 4, **dadurch gekennzeichnet, dass** das Dreiwegeventil (57) die erste Flüssigkeit zur sekundären Wärmeenergieerzeugungsquelle (56) leitet, wenn die Temperatur T1 der ersten Flüssigkeit an einem vorgelagerten Übergang zwischen dem Umgehungsrohr (58) und der sekundären Quelle (56) unter der Temperatur T2 der vierten Flüssigkeit im Inneren eines offenen Speicherbehälters (156) der zweiten Quelle liegt.

6. Anlage nach Anspruch 4, **dadurch gekennzeichnet, dass** die sekundäre Wärmeenergieerzeugungsquelle (56) einen zweiten Wärmetauscher (152) umfasst, der an zwei Flüssigkeitskreisläufe angeschlossen ist, und in dem eine dritte Flüssigkeit eines dritten Kreislaufs (153) Wärmeenergie an die vierte Flüssigkeit überträgt.

7. Anlage nach einem der Ansprüche 3 oder 6, **dadurch gekennzeichnet, dass** der Speicherbehälter (106, 115, 126, 136, 146, 156) und der zweite Wärmtauscher (102, 112, 122, 132, 142, 152) hydraulisch parallel angeordnet sind.

8. Anlage nach Anspruch 1, **dadurch gekennzeichnet, dass** der Primärkreislauf (23, 33) an ein Gebäudeheizungsnetz (70, 80) angeschlossen ist, wobei der Auslass (71, 81) des Netzes (70, 80) stromauf des Dreiwegeventils (27, 37) und stromab des ersten Wärmetauschers (22, 32) angeschlossen ist, wobei der Einlass (72, 82) des Netzes (70, 80) stromauf des ersten Wärmetauschers (22, 32) und stromab der Hauptwärmeenergieerzeugungsquelle (25, 35) angeschlossen ist.

9. Anlage nach Anspruch 1, **dadurch gekennzeichnet, dass** sie eine Vielzahl von ersten, einzelnen Wärmetauschern (42) umfasst, von denen jeder jeweils in einer einzelnen Gehäuseeinheit angeordnet ist.

## Revendications

1. Installation de chauffage (1, 11, 21, 31, 41, 51) destinée à la production d'eau chaude domestique, l'installation comprenant un premier échangeur thermique (2, 12, 22, 32, 42, 52) relié à deux circuits de fluide et dans lequel un premier fluide d'un circuit principal (3, 13, 23, 33, 43, 53) transmet de l'énergie thermique à un second fluide d'un circuit secondaire (4, 14, 24, 34, 44, 54) constitué par l'eau chaude domestique, **caractérisée en ce que** le circuit principal (3, 13, 23, 33, 43, 53) comprend :
- une source de production d'énergie thermique principale (5, 15, 25, 35, 45, 55) et une source de production d'énergie thermique secondaire (6, 16, 26, 36, 46, 56), les sources principale et secondaire étant agencées hydrauliquement en série, la source secondaire (6, 16, 26, 36, 46, 56) étant agencée en amont de la source principale (5, 15, 25, 35, 45, 55) ;
- un tuyau de dérivation (8, 18, 28, 38, 48, 58) de la source secondaire agencé hydrauliquement parallèlement par rapport à la source secondaire (6, 16, 26, 36, 46, 56) ;
- une vanne trois voies (7, 17, 27, 37, 47, 57) capable de diriger de manière sélective le premier fluide dans la source secondaire (6, 16, 26, 36, 46, 56) ou dans le tuyau de dérivation (8, 18, 28, 38, 48, 58) ;
et **en ce que** l'installation de chauffage (1, 11, 21, 31, 41, 51) comprend une unité de commande (10, 20, 30) pour commander la vanne trois voies (7, 17, 27, 37, 47, 57).

2. Installation selon la revendication 1, **caractérisée en ce que** la vanne trois voies (7, 17, 27, 37, 47, 57) dirige le premier fluide en direction de la source de production d'énergie thermique secondaire (6, 16, 26, 36, 46, 56) lorsque la température T1 du premier fluide, au niveau d'une jonction amont entre le tuyau de dérivation (8, 18, 28, 38, 48,) et la source secondaire (6, 16, 26, 36, 46,), est en dessous de la température T2 du premier fluide à l'intérieur d'un réservoir de stockage fermé (106, 116, 126, 136, 146) de la source secondaire (6, 16, 26, 36, 46, 56).

3. Installation selon la revendication 2, **caractérisée en ce que** la source de production d'énergie thermique secondaire (6, 16, 26, 36, 46,) comprend un second échangeur thermique (102, 112, 122, 132, 142) relié aux deux circuits de fluide et dans lequel un troisième fluide d'un troisième circuit (103, 113, 123, 133, 143) transmet de l'énergie thermique au premier fluide.

4. Installation selon la revendication 1, **caractérisée en ce que** la source de production d'énergie thermique secondaire (56) comprend un troisième échangeur thermique (160) relié à deux circuits de fluide et dans lequel le premier fluide du circuit principal (53) exploite l'énergie thermique provenant d'un quatrième fluide circulant dans un quatrième circuit (161).

5. Installation selon la revendication 4, **caractérisée en ce que** la vanne trois voies (57) dirige le premier fluide en direction de la source de production d'énergie thermique secondaire (56) lorsque la température T1 du premier fluide, au niveau d'une jonction amont entre le tuyau de dérivation (58) et la source secondaire (56) est en dessous de la température T2 du quatrième fluide à l'intérieur d'un réservoir de stockage ouvert (156) de la source secondaire (56).

6. Installation selon la revendication 4, **caractérisée en ce que** la source de production d'énergie thermique secondaire (56) comprend un second échangeur thermique (152) relié à deux circuits de fluide et dans lequel un troisième fluide d'un troisième circuit (153) transmet de l'énergie thermique au quatrième fluide.

7. Installation selon les revendications 3 ou 6, **caractérisée en ce que** le réservoir de stockage (106, 116, 126, 136, 146, 156) et le second échangeur thermique (102, 112, 122, 132, 142, 152) sont agencés hydrauliquement en parallèle.

8. Installation selon la revendication 1, **caractérisée en ce que** le circuit principal (23, 33) est relié à un réseau de chauffage d'immeuble (70, 80), la sortie (71, 81) du réseau (70, 80) étant reliée en amont de la vanne trois voies (27, 37) et en aval du premier échangeur thermique (22, 32), l'entrée (72, 82) du réseau (70, 80) étant reliée en amont du premier échangeur thermique (22, 32) et en aval de la source de production d'énergie thermique principale (25, 35).

9. Installation selon la revendication 1, **caractérisée en ce qu'**elle comprend plusieurs premiers échangeurs thermiques individuels (42,) agencés chacun respectivement dans une unité de logement individuel.
